(19) Europäisches Patentamt
European Patent Office
Office européen des brevets

(11) EP 3 134 453 B1

(12) EUROPEAN PATENT SPECIFICATION

(45) Date of publication and mention of the grant of the patent:
**24.04.2019 Bulletin 2019/17**

(21) Application number: **15720880.2**

(22) Date of filing: **24.04.2015**

(51) Int Cl.:
***C08G 18/66*** $^{(2006.01)}$ ***C08G 18/68*** $^{(2006.01)}$
***C08G 18/76*** $^{(2006.01)}$ ***C08G 63/52*** $^{(2006.01)}$
***C08G 18/28*** $^{(2006.01)}$ ***C08G 18/32*** $^{(2006.01)}$
***C08G 18/42*** $^{(2006.01)}$ ***C09J 175/14*** $^{(2006.01)}$

(86) International application number:
**PCT/US2015/027442**

(87) International publication number:
**WO 2015/164695 (29.10.2015 Gazette 2015/43)**

# (54) BREATHABLE AND CROSSLINKABLE THERMOPLASTIC POLYURETHANE

ATMUNGSAKTIVES UND VERNETZBARES THERMOPLASTISCHES POLYURETHAN

POLYURÉTHANE THERMOPLASTIQUE RÉTICULABLE ET PERMÉABLE À L'AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2014 US 201461983824 P**
**07.05.2014 US 201461989909 P**

(43) Date of publication of application:
**01.03.2017 Bulletin 2017/09**

(73) Proprietor: **Lubrizol Advanced Materials, Inc.**
**Cleveland, OH 44141-3247 (US)**

(72) Inventor: **MAKAL, Umit G.**
**Cleveland, Ohio 44141-3247 (US)**

(74) Representative: **Bradley, Josephine Mary et al**
**Marks & Clerk LLP**
**40 Torphichen Street**
**Edinburgh EH3 8JB (GB)**

(56) References cited:
**EP-A1- 0 522 250**
**WO-A1-2011/091196**
**US-A- 3 402 148**
**US-A1- 2005 119 438**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 134 453 B1

## Description

### Field of the invention

The present invention relates to soft, processable, thermoplastic polyurethane (TPU) compositions which can be crosslinked, and particularly TPU compositions that can be used in adhesive films or tapes where the TPU composition can be easily crosslinked after the tape or adhesive is used in the construction of an article such as a garment. In one embodiment, the crosslinking of the adhesive films or tapes is carried out by exposing the TPU to UV radiation. Crosslinked adhesive films or tapes containing the described TPU compositions may be applied to fabrics or garments.

### BACKGROUND OF THE INVENTION

The use of polyurethanes, including thermoplastic polyurethanes (TPU) in adhesives for different substrates, including fabrics, is known. These TPU containing adhesives systems can vary in both thermal and physical properties due to the properties of the TPU used in the system. The state of the art shows several needs relating to TPU adhesive systems, especially when used with fabric. Some of these needs are for example, reducing bonding time needed to develop adequate bonding strength between articles, lower temperatures needed to process such systems for the protection of delicate fabrics, sustained adhesion of the films in the garment at high laundering and drying temperatures, and after numerous cycles of such laundering and drying, and/or breathable films and/or fabrics. Thus, there is a general need in the state of the art for a technology for cross-linking adhesive TPU systems that can be applied and/or activated (i.e., crosslinked) at relatively low temperatures, but upon activation (e.g., activation by ultraviolet light), the resulting system exhibits higher temperature resistance, as well as excellent breathability, all while maintaining physical properties, like elasticity, the market expects from conventional TPU based systems. In addition, there is a need for processable (i.e. extrudable, moldable, etc.) soft (e.g. Shore hardness below 65A), TPU compositions that are plasticizer free and provide the aforementioned benefits.

### SUMMARY OF THE INVENTION

In one embodiment, the present invention provides a thermoplastic polyurethane (TPU) composition which includes the reaction product of (1) a hydroxyl terminated compound containing carbon-carbon double bonds, (2) a polyisocyanate, and (3) a linear monohydric alcohol containing from 20 to 65 carbon atoms.

In another embodiment, the present invention further provides a thermoplastic polyurethane (TPU) composition which includes the reaction product of (1) a hydroxyl terminated compound containing carbon-carbon double bonds, (2) a polyisocyanate, and (3) a linear monohydric alcohol containing from 20 to 65 carbon atoms, and (4) an additional hydroxyl terminated compound.

In another embodiment, the present invention further discloses a process of making the TPU compositions, including the steps of: (a) reacting (1) a hydroxyl terminated compound containing carbon-carbon double bonds, (2) a polyisocyanate, and (3) a linear monohydric alcohol containing from 20 to 65 carbon atoms; resulting in a crosslinkable TPU composition (in some embodiments, a UV crosslinkable TPU composition); (b) extruding the thermoplastic polyurethane composition into a hot extruded strand; and (c) cooling the hot extruded strand to below the melting point of the thermoplastic polyurethane composition to produce an uncured extruded thermoplastic polyurethane.

In another embodiment, the present invention further discloses an adhesive film or tape which comprises the described TPU composition.

In another embodiment, the present invention further discloses a fiber which comprises the described TPU composition.

In another embodiment, the invention also provides end articles containing the disclosed adhesive film or tape or composition. These articles include fabrics and garments.

In another embodiment, the invention further discloses a method of bonding two components together which comprises applying the adhesive film or tape or composition comprising the disclosed TPU via irradiation to raise the melting point of the TPU. In one embodiment the irradiation utilizes UV radiation.

### DETAILED DESCRIPTION OF THE INVENTION

The process to make the thermoplastic polyurethane (TPU) of this invention includes a reaction with a linear monohydric alcohol. The obtained TPU exhibits a significant increase in the melting point after it is irradiated. In one aspect, the TPU compositions of the present invention include the reaction product of (1) a hydroxyl terminated compound containing carbon-carbon double bonds, (2) a polyisocyanate, and (3) a linear monohydric alcohol containing from 20 to 65 carbon atoms. The technique under which these reactants are polymerized to synthesize the TPU may be conducted

utilizing conventional processing equipment, catalysts, and processes. The polymerization is conducted in a manner that will result in the desired polymer characteristics or properties. The types and levels of hydroxyl terminated compound containing carbon-carbon double bonds, polyisocyanate, and linear monohydric alcohol containing from 20 to 65 carbon atoms will be adjusted to attain the desired set of chemical and physical characteristics for the polymer being synthesized. The polymerization techniques useful in making the TPUs of this invention include conventional methods, such as reactive extrusion, batch polymerization, and solution polymerization.

The hydroxyl terminated compound containing carbon-carbon double bonds utilized in making such TPUs is of the structural formula:

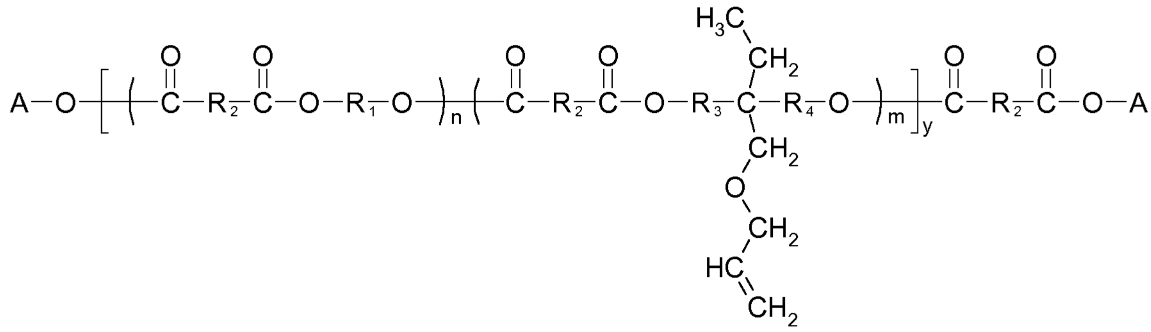

wherein A independently represents $-R_1OH$ or a moiety selected from the structure represented as follows:

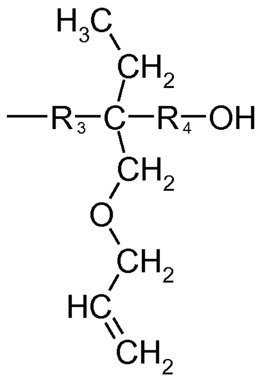

wherein $R_1$, $R_2$, $R_3$ and $R_4$ are each independently divalent linear or branched alkylene moieties that contain from 1 to about 10 carbon atoms, or a divalent ether group represented by $-R_5-O-R_5-$, wherein each $R_5$ is independently selected from a divalent alkylene moiety containing 1 to 5 carbon atoms, and where n and m are integers where n ranges from 0 to 50 and m ranges from 1 to 44, and y is an integer ranging from about 1 to about 20. In some embodiments, $R_1$, $R_2$, $R_3$ and $R_4$ can be the same or different and represent divalent linear and branched alkylene moieties that contain from 1 to about 10 carbon atoms. In one aspect, $R_1$, $R_2$, $R_3$ and $R_4$ independently are selected from methylene, ethylene, propylene, butylene, pentylene, and hexylene moieties. In another aspect, $R_1$ and $R_2$ can contain 4 carbon atoms (e.g., butylene) with $R_3$ and $R_4$ containing 1 carbon atom (e.g., methylene). In still another aspect, $R_1$, $R_2$, $R_3$ and $R_4$ independently are a divalent ether group represented by $-R_5-O-R_5-$, wherein $R_5$ independently is selected from a divalent alkylene moiety containing 1 to 5 carbon atoms, and $R_2$, $R_3$ and $R_4$ are as defined above. In one aspect of the invention, n and m are integers where n ranges from about 0 to about 50, from about 1 to about 45 in another aspect, from about 3 to about 40 in still another aspect, from about 5 to about 35 in still another aspect, from about 10 to about 25 in even still another aspect, and from about 15 to about 20 in a further aspect; m ranges from about 1 to about 44, from about 1 to about 40 in another aspect, from about 3 to about 35 in still another aspect, from about 5 to about 30 in still another aspect, from about 10 to about 25 in even still another aspect, and from about 15 to about 20 in a further aspect; and y is an integer ranging from about 1 to about 20.

In another aspect of the invention, the hydroxyl terminated compound containing carbon-carbon double bonds is the reaction product of the following components:

a) from about 1.5 mole % to about 55 mole % of an unsaturated chain extender selected from a compound represented by the formula:

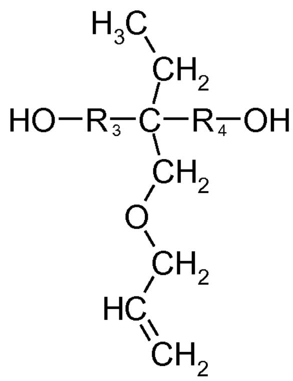
;

b) from about 0 mole % to about 50 mole % of a diol selected from a compound represented by the formula:

$$HO-R_1-OH;$$

and

c) from about 45 to about 49 mole % of a diacid represented by the formula:

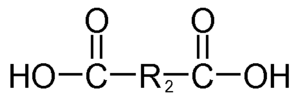
;

wherein $R_1$, $R_2$, $R_3$, and $R_4$ are as previously defined. It will be recognized by the skilled artisan that the total amount of each of the components making up the hydroxyl terminated compound containing carbon-carbon double bonds will not exceed 100 mole %.

A suitable unsaturated chain extender is trimethylolpropane monoallyl ether (TMPME).

Suitable diols include but are not limited to ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and mixtures thereof.

Suitable dicarboxylic acids which may be used alone or in mixtures generally include but are not limited to succinic acid, glutaric acid, adipic acid, pimelic acid, suberic acid, azelaic acid, sebacic acid, phthalic acid, isophthalic acid, terephthalic acid, 1,4-cyclohexanedicarboxylic acid, and the like. Anhydrides of the above dicarboxylic acids, such as phthalic anhydride, tetrahydrophthalic anhydride, or the like, can also be used to synthesize the hydroxyl terminated compound containing carbon-carbon double bonds by a transesterification reaction as previously discussed.

In one embodiment, the hydroxyl terminated compound containing carbon-carbon double bonds is the reaction product of 1.5 mole % to about 55 mole % of TMPME, with 0 mole % to about 50 mole % of 1,4-butanediol, and from about 45 mole % to about 49 mole % of adipic acid.

In one embodiment, the hydroxyl terminated compound containing carbon-carbon double bonds can be made by placing an unsaturated chain extender, a diol, and a diacid in a reactor under agitation, heating the reaction medium between about 120°C to about 200°C at ambient pressure for about 3 to 8 hours, and removing any water that is generated. A transesterification catalyst such as tetra-(2-ethylhexyl) titanate is added and a vacuum (0-15 mm Hg) is optionally applied to the reaction medium to catalyze the reaction. The reaction medium is heated between about 180°C to about 210°C and generated water is continually removed until an acid number below about 0.5 is obtained.

In one embodiment, the polyisocyanate used in synthesizing the thermoplastic polyurethane can be selected from a diisocyanate. While aliphatic diisocyanates can be utilized, aromatic diisocyanates are typically used in making polymers for most applications. In some embodiments, the polyisocyanate component is essentially free of, or even completely free of aliphatic diisocyanates. Moreover, the use of multifunctional isocyanate compounds, i.e., triisocyanates, etc., which cause undesirable premature crosslinking, are generally avoided and thus the amount used, if any, is generally less than 4 mole percent in one aspect, and less than 2 mole percent in another aspect, based upon the total moles of all of the various isocyanates used.

Suitable diisocyanates include aromatic diisocyanates such as: 4,4'-methylenebis(phenyl isocyanate) (MDI);

m-xylylene diisocyanate (XDI), phenylene-1,4-diisocyanate, naphthalene-1,5-diisocyanate, diphenylmethane-3,3'-dimethoxy-4,4'-diisocyanate, 3,3-Dimethyl-4,4-biphenylene diisocyanate (TODI), 1,5-naphthalene diisocyanate (NDI), and toluene diisocyanate (TDI); as well as aliphatic diisocyanates such as isophorone diisocyanate (IPDI), 1,4-cyclohexyl diisocyanate (CHDI), decane-1,10-diisocyanate, lysine diisocyanate (LDI), 1,4-butane diisocyanate (BDI), isophorone diisocyanate (PDI), and dicyclohexylmethane-4,4'-diisocyanate (H12MDI). Mixtures of two or more polyisocyanates may be used. In some embodiments, the polyisocyanate is MDI and/or H12MDI. In some embodiments, the polyisocyanate includes MDI. In some embodiments, the polyisocyanate may include H12MDI. In some embodiment, the polyisocyanate component of the invention is essentially free of, or even completely free of, hexamethylene diisocyanate (HDI). Dimers and trimers of the above diisocyanates may also be used as well as a blend of two or more diisocyanates may be used.

The polyisocyanate used in this invention may be in the form of a low molecular weight polymer or oligomer which is end capped with an isocyanate. For example, the hydroxyl terminated polyether intermediate described above may be reacted with an isocyanate-containing compound to create a low molecular weight polymer end capped with isocyanate. In the TPU art, such materials are normally referred to as pre-polymers. Such pre-polymers normally have a number average molecular weight (Mn) which is within the range of about 500 to about 10,000.

The mole ratio of the one or more diisocyanates is generally from about 0.95 to about 1.05 in one aspect, and from about 0.98 to about 1.03 moles per mole in another aspect, of the total moles of the one or more hydroxyl terminated intermediates and the one or more chain extenders.

In one embodiment, the linear monohydric alcohol containing from 20 to 65 carbon atoms is a blend of linear monohydric alcohols which contain carbon atoms in the range of from 20 to 65. In another embodiment, the linear monohydric alcohol containing from 20 to 65 carbon atoms is non-substituted. In another embodiment, the linear monohydric alcohol containing from 20 to 65 carbon atoms is saturated. In still another embodiment, the linear monohydric alcohol containing from 20 to 65 carbon atoms is a primary alcohol. In another embodiment, the linear monohydric alcohol containing from 20 to 65 carbon atoms is non-substituted, saturated and primary alcohol or mixtures thereof. In one embodiment, the linear monohydric alcohol containing from 20 to 65 carbon atoms is saturated and it is a blend of linear monohydric alcohols whose average number of carbon atoms ranges from 20 to 63 carbon atoms, from 23 to 63 carbon atoms, from 20 to 60 carbon atoms, from 30 to 62 carbon atoms, from 30 to 50 carbon atoms, or from 32 to 48 carbon atoms. Suitable linear monohydric alcohol containing from 20 to 65 carbon atoms include arachidyl alcohol, heneicosyl alcohol, behenyl alcohol, lignoceryl alcohol, ceryl alcohol, 1-heptaconasol, montanyl alcohol, 1-nonaconasol, triacontanol alcohol, 1-dotriacontanol, geddyl alcohol, or mixtures thereof, like policosanol. Suitable examples of these linear monohydric alcohols include Unilin™ Alcohols commercially from Baker Hughes, including Unilin™ 350, Unilin™ 700, Unilin™ 425, and Unilin™ 550, and any combinations thereof.

In one embodiment, the linear monohydric alcohol containing from 20 to 65 carbon atoms has a hydroxyl number of 60 to 130.

In another aspect, the present invention refers to TPU compositions which include the reaction product of (1) the hydroxyl terminated compound containing carbon-carbon double bonds as defined above, (2) a polyisocyanate, (3) a linear monohydric alcohol containing from 20 to 65 carbon atoms, and (4) an additional hydroxyl terminated compound. In some embodiments the polyol includes a poly(butylene adipate) polyol, a polyethylene glycol, or any combination thereof. In some embodiments the polyol includes a poly(butylene adipate) polyol.

In one embodiment, the additional hydroxyl terminated compound is a hydroxyl terminated polyether compound, hydroxyl terminated polyester compound, a hydroxyl terminated polycarbonate compound, a polyol compound comprising a telechelic polyamide, and mixtures thereof. To inhibit crystallization, the hydroxyl terminated intermediate can be (1) comprised of repeat units that are derived from a branched glycol or (2) is a random copolyether or a random copolyester. For example, a hydroxyl terminated random copolyether compound can be synthesized by reacting two different alkyl diols or glycols with an alkylene oxide. In the alternative, the alkyl diol or glycol can be branched to inhibit crystallization.

The alkyl diols or glycols used in making the hydroxyl terminated polyether compound will typically contain from 2 to 12 carbon atoms and the alkylene oxide will typically contain from 2 to 6 carbon atoms. The glycols that can be used in making the hydroxyl terminated polyether compound can be aliphatic, aromatic, or combinations thereof, and normally contain a total of from 2 to 8 carbon atoms. Some representative examples of glycols that can be used include ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and the like. Some suitable glycols include ethylene glycol, 1,3-propanediol and 1,4-butanediol. Ethylene oxide and propylene oxide are representative examples of alkylene oxides that can be used in synthesizing the hydroxyl functional polyether compound.

A hydroxyl functional random copolyether compound that is useful in the practice of this invention can be produced by first reacting propylene glycol with propylene oxide followed by subsequent reaction with ethylene oxide. This results in the formation of poly(propylene-ethylene) glycol. Some representative examples of additional useful hydroxyl functional polyether polyols include poly(ethylene) glycol, poly(propylene) glycol, and poly(tetramethylene ether) glycol, and the like. Poly(tetramethylene ether) glycol is a suitable hydroxyl functional polyether polyol for use in making

the thermoplastic polyurethanes of this invention.

Hydroxyl terminated random copolyester compunds can be synthesized through (1) an esterification reaction of two different alkyl diols or glycols with one or more dicarboxylic acids or anhydrides, or (2) a transesterification reaction of two different alkyl diols or glycols with one or more esters of dicarboxylic acids. In the alternative, the alkyl diol or glycol can be branched to inhibit crystallization of the hydroxyl terminated copolyester compound. Suitable hydroxyl terminated polyester compounds also include various lactones such as hydroxyl terminated polycaprolactone compounds typically made from ε-caprolactone and a bifunctional initiator such as diethylene glycol.

The diols or glycols used in making the hydroxyl terminated polyester compound are the same as the diols or glycols that can be used in synthesizing the hydroxyl terminated polyether compound. The dicarboxylic acids used in making the hydroxyl terminated copolyester compound can be aliphatic, cycloaliphatic, aromatic, or combinations thereof. Suitable dicarboxylic acids which may be used alone or in mixtures generally have a total of from 4 to 15 carbon atoms and include: succinic acid, glutaric acid, adipic acid, pimelic acid, suberic acid, azelaic acid, sebacic acid, dodecanedioic acid, phthalic acid, isophthalic acid, terephthalic acid, 2,6-naphthalene dicarboxylic acid, 1,4-cyclohexanedicarboxylic acid, and the like. Adipic acid is a suitable acid for use. Anhydrides of the above dicarboxylic acids, such as phthalic anhydride, tetrahydrophthalic anhydride, or the like, can also be used to synthesize the hydroxyl terminated polyester compound by a transesterification reaction as previously explained. Some representative examples of useful hydroxyl functional random copolyester polyols include poly(butylene adipate)glycol, poly(butylene hexylene adipate) glycol, poly(ethylene hexylene adipate) glycol, poly(propylene hexylene adipate) glycol, poly(ethylene butylene adipate) glycol, poly(butylene hexylene succinate) glycol, poly(butylene hexylene glutarate) glycol, poly(butylene hexylene pimelate) glycol, poly(butylene hexylene azelate) glycol, poly(butylene hexylene terephthalate) glycol, poly(butylene hexylene isophthalate) glycol, and the like. Poly (butylene hexylene adipate) glycol is a suitable hydroxyl functional copolyester polyol for utilization in synthesizing many TPUs in accordance with the practice of this invention.

The hydroxyl terminated polyether compound or the hydroxyl terminated polyester compound will typically have a number average molecular weight (Mn), as determined by assay of the terminal functional groups, which is within the range of about 350 to about 10,000 in one aspect, from about 500 to about 5,000 in another aspect, from about 700 to about 4,000 in a further aspect, and from about 1,000 to about 3,000 in a still further aspect. A blend of two or more hydroxyl terminated compounds may be used.

Suitable hydroxyl terminated polycarbonates include those prepared by reacting a glycol with a carbonate. U.S. Patent No. 4,131,731 discloses hydroxyl terminated polycarbonates and their preparation. Such polycarbonates are linear and have terminal hydroxyl groups with essential exclusion of other terminal groups. The essential reactants are glycols and carbonates. Suitable glycols are selected from cycloaliphatic and aliphatic diols containing 4 to 40, and or even 4 to 12 carbon atoms, and from polyoxyalkylene glycols containing 2 to 20 alkoxy groups per molecular with each alkoxy group containing 2 to 4 carbon atoms. Diols suitable for use in the present invention include aliphatic diols containing 4 to 12 carbon atoms such as butanediol-1,4, pentanediol-1,5, neopentyl glycol, hexanediol-1,6, 2,2,4-trimethylhexanediol-1,6, decanediol-1,10, hydrogenated dilinoleylglycol, hydrogenated dioleylglycol; and cycloaliphatic diols such as cyclohexanediol-1,3, dimethylolcyclohexane-1,4, cyclohexanediol-1,4, dimethylolcyclohexane-1,3, 1,4-endomethylene-2-hydroxy-5-hydroxymethyl cyclohexane, and polyalkylene glycols. The diols used in the reaction may be a single diol or a mixture of diols depending on the properties desired in the finished product. Polycarbonate intermediates which are hydroxyl terminated are generally those known to the art and in the literature. Suitable carbonates are selected from alkylene carbonates composed of a 5 to 7 member ring. Suitable carbonates for use herein include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate. Also, suitable herein are dialkylcarbonates, cycloaliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either alkyl or aryl. On the other hand, if one group is aryl, the other can be alkyl or cycloaliphatic. Examples of suitable diarylcarbonates, which can contain 6 to 20 carbon atoms in each aryl group, are diphenylcarbonate, ditolylcarbonate, and dinaphthylcarbonate.

In one embodiment, the polyol compound comprises a telechelic polyamide. Telechelic polyamides are polyamide oligomers with specified percentages of two functional groups of a single chemical type. Ranges for the percent difunctional that are preferred to meet the definition of telechelic are at least 70 or 80. The telechelic polyamide can comprise: (a) two functional end groups selected from hydroxyl, carboxyl, or primary or secondary amine; and (b) a polyamide segment wherein: (i) said polyamide segment comprises at least two amide linkages characterized as being derived from reacting an amine with a carboxyl group; (ii) said polyamide segment comprises repeat units derived from polymerizing two or more monomers selected from the group consisting of lactam monomers, aminocarboxylic acids monomers, dicarboxylic acids monomers, and diamine monomers. The telechelic polyamide, in some embodiments, may be characterized as a liquid with a viscosity of less than 100,000 cps at 70°C as measured by a Brookfield circular

disc viscometer with the circular disc spinning at 5 rpm. In some embodiments, the telechelic polyamide is characterized by a weight average molecular weight from about 200 to 10,000 g/mole and comprises a diversity of amide forming repeating units disrupting hydrogen bonding between amide components.

In one embodiment, the TPU compositions of the present invention is the reaction product of (1) a hydroxyl terminated compound containing carbon-carbon double bonds which is the reaction product of 1.5 mole % to about 55 mole % of TMPME, with 0 mole % to about 50 mole % of 1,4-butanediol, and from about 45 mole % to about 49 mole % of adipic acid, (2) MDI and (3) a blend of saturated linear monohydric alcohols whose average number of carbon atoms ranges from 30 to 62 carbon atoms.

In another aspect, the present invention refers to TPU compositions which include the reaction product of (1) a hydroxyl terminated compound containing carbon-carbon double bonds, (2) a polyisocyanate, (3) a linear monohydric alcohol containing from 20 to 65 carbon atoms, and (5) a chain extender.

In one embodiment, the chain extender is selected from glycol chain extenders, amino alcohol chain extenders or amino chain extenders.

In one embodiment, the glycol chain extender will be a combination of a saturated glycol chain extender and glycol chain extender containing carbon-carbon double bonds (unsaturated glycol chain extender).

The saturated chain extender includes organic diols or glycols having from 2 to about 20 carbon atoms, such as alkane diols (straight chained and branched), cycloaliphatic diols, alkylaryl diols, and the like. Alkane diols which have a total from about 2 to about 12 carbon atoms are often utilized. Some representative examples of alkane diols that can be used include ethanediol, propane glycol, 1,6-hexanediol, 1,3-butanediol (1,3-BDO), 1,5-pentanediol, neopentylglycol (NPG), 2-butyl-2-ethyl-1,3-propanediol, 2,4-diethyl-1,5-pentanediol, 3-methyl-1,5-pentanediol, and 1,4-butanediol. Dialkylene ether glycols, such as diethylene glycol and dipropylene glycol, can also be used as the chain extender. Examples of suitable cycloaliphatic diols include 1,2-cyclopentanediol, 1,4-cyclohexanedimethanol (CHDM) and the like. Examples of suitable alkylaryl diols include hydroquinone bis(β-hydroxyethyl)ether (HQEE), 1,4-benzenedimethanol, bisethoxy biphenol, bisphenol A ethoxylates, bisphenol F ethoxylates and the like. Still other suitable chain extenders are 1,3-bis(2-hydroxyethyl)benzene, and 1,2-bis(2-hydroxyethoxy)benzene. Mixtures of the above noted chain extenders can also be utilized.

Saturated chain extenders with a functionality of greater than 2 may also be used with the proviso that the resulting polymer retains the desired thermoplastic nature and other desired chemical and physical characteristics. Examples of such multifunctional chain extenders include trimethylolpropane, glycerin, and pentraerythritol. Normally, multifunctional chain extenders are used in conjunction with difunctional chain extenders to introduce a limited amount of chain branching. Accordingly, the level of multifunctional chain extenders typically does not exceed 10 mole percent of the total amount of chain extenders used in making the thermoplastic polyurethane. It is more typical for the level of multifunctional saturated chain extenders to be limited to being within the range of 0.5 mole percent to 5 mole percent based upon the total amount of chain extenders used in making the TPU. In many cases, the TPU will be void of chain extenders having a functionality greater than 2. In any case, saturated difunctional chain extenders will typically represent at least about 90 mole percent of the total amount of saturated chain extenders used in synthesizing the TPU.

The saturated linear chain extenders can be represented by the structural formula:

$$HO-\left[CH_2\right]_n-OH$$

wherein n represents an integer from 2 to 20 and wherein n typically represents an integer from 2 to 12. Accordingly, the linear chain extender will typically be selected from the group consisting of ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol. However, it should be appreciated that various mixtures of diols can be utilized as the chain extender in the practice of this invention.

The unsaturated glycol chain extenders used in making the TPUs of this invention are typically of the structural formula:

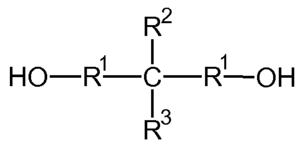

wherein $R^1$ groups can be the same or different and represent alkylene groups that contain from 1 to about 5 carbon atoms, wherein $R^2$ represents a hydrogen atom or an alkyl group containing from 1 to about 5 carbon atoms, and wherein

$R^3$ represents an unsaturated hydrocarbyl group containing from 2 to about 10 carbon atoms. $R^1$ will typically represent a divalent alkylene group that contains from 1 to 7 carbon atoms in one aspect of the invention and from 1 to 3 carbon atoms in another aspect. In still another aspect $R^1$ can be represented by the formula: $-(CH_2)_{n'}-$. In many cases, $R^1$ can be a methylene group. $R^2$ will typically represent a methyl, an ethyl, an isopropyl group, or a normal-propyl group. $R^3$ is typically a monoallyl ether group, such as a monoallyl ether group of the structural formula: $-(CH_2)_{n'}-O-CH_2-CH=CH_2$, wherein n' in the formulae above represents an integer from 1 to about 7 in one aspect and from 1 to 3 in another aspect. It is typical for n' to represent an integer from 1 to 3.

In one embodiment, the unsaturated glycol chain extender for utilization in the practice of this invention is trimethylolpropane monoallyl ether. Trimethylolpropane monoallyl ether is of the structural formula:

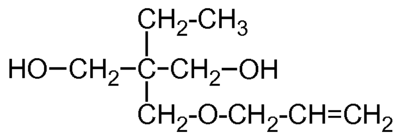

and is commercially available from a variety of sources.

In another aspect, the present invention refers to TPU compositions which include the reaction product of (1) a hydroxyl terminated compound containing carbon-carbon double bonds, (2) a polyisocyanate, (3) a linear monohydric alcohol containing from 20 to 65 carbon atoms, (4) an additional hydroxyl terminated compound and (5) a chain extender.

In another aspect, the present invention further discloses a process of making the TPU compositions, including the steps of: (a) reacting (1) a hydroxyl terminated compound containing carbon-carbon double bonds, (2) a polyisocyanate, and (3) a linear monohydric alcohol containing from 20 to 65 carbon atoms; resulting in a TPU composition with crosslinkable properties, in some embodiments, UV crosslinkable properties ; (b) extruding the thermoplastic polyurethane composition into a hot extruded tube; and (c) cooling the hot extruded tube to below the melting point of the thermoplastic polyurethane composition to produce an uncured extruded thermoplastic polyurethane.

Alternatively, in one embodiment, the reaction in step (a) further includes (4) an additional hydroxyl terminated compound and/or (5) a chain extender.

The process to produce the TPU polymer of this invention can utilize conventional TPU manufacturing equipment. The hydroxyl terminated compound containing carbon-carbon double bonds, the polyisocyanate, the linear monohydric alcohol containing from 20 to 65 carbon atoms, and the optional additional hydroxyl terminated compound and optional chain extender, are generally added together and reacted in accordance with standard polyurethane synthesis methodology. The TPU forming components of the present invention can be melt polymerized in a suitable mixer, such as an internal mixer known as a Banbury mixer, or in an extruder. In one process, the optional additional hydroxyl terminated compound is blended with the optional chain extender and added to the extruder as a blend. The polyisocyanate is added separately to the extruder. Suitable processing or polymerization starting temperatures of the polyisocyanate are from about 100°C to about 200°C in one aspect, and from about 100°C to about 150°C in another aspect. Suitable processing or polymerization starting temperatures of the blend of the additional hydroxyl terminated compound and the chain extender are from about 100°C to about 220°C in one aspect, and from about 150°C to 200°C in a further aspect. Suitable mixing times in order to enable the various components to react and form the TPU polymers of the present invention are generally from about 2 to about 10 minutes in one aspect, and from about 3 to about 5 minutes in another aspect.

It is often desirable to utilize catalysts such as stannous and other metal carboxylates as well as tertiary amines. Examples of metal carboxylate catalysts include stannous octoate, dibutyltin dilaurate, phenyl mercuric propionate, lead octoate, iron acetylacetonate, magnesium acetylacetonate, and the like. Examples of tertiary amine catalysts include triethyleneamine, and the like. The amount of the one or more catalysts is low, generally from about 50 to about 100 parts by weight per million parts by weight of the end TPU polymer formed.

The weight average molecular weight (Mw) of the TPU polymer, before being crosslinked, of the present invention range from about 90,000 to about 600,000 Daltons in one aspect, from about 100,000 to about 300,000 Daltons in another aspect, and from about 120,000 to about 250,000 Daltons in a further aspect. The Mw of the TPU polymer is measured according to gel permeation chromatography (GPC) against polystyrene standard.

The TPU polymers of the present invention can be mixed with various conventional additives or compounding agents, such as plasticizers, fillers, extenders, pigments, lubricants, UV absorbers, and the like. In one embodiment, the TPU polymer of the invention is free of UV absorbers. The level of conventional additives will depend on the final properties and cost of the desired end-use application, as is well known to those skilled in the art of compounding TPUs. The additives may be added during the reaction to form the TPU, but are normally added in a second compounding step.

In another aspect, the present invention refers to an adhesive tape or film which comprises the TPU composition of the present invention.

In another aspect, the present invention refers to a method of bonding two components together which comprises applying the adhesive film or tape or composition comprising the disclosed TPU via irradiation. The TPU composition of the invention is cross-linkable by UV, E-beam or gamma-beam irradiation. The resulting cross-linked TPU shows an increased melting point. In one embodiment, the irradiation utilizes UV radiation and a photoinitiator is present. The photoinitiator may be necessary for the UV crosslinking but is optional for E-beam and/or gamma-beam crosslinking. In still other embodiment, the irradiation utilizes UV radiation but a photoinitiator is not present. Any of the TPU reaction mixtures and/or TPU compositions may be used and/or modified by this process. In one embodiment, the two components are films.

This invention also provides for the resulting cross-linked adhesive films obtained according to the above described method of bonding.

The disclosed technology solves the problem of application of TPU adhesive films or tapes to end articles, like fabrics or garments at a low melting point, but via activation of subject adhesive TPU, the final melting point is greatly increased. This increase gives rise to potential value for end article longevity in wash cycles (higher temp wash and drying) as in the case of an apparel item.

Furthermore, the disclosed technology may provide an improved breathability for films, fabrics or garments comprising TPU. The disclosed technology is also a solution to the problem of lack of or low breathability for films, fabrics or garments under high temperature environments.

Therefore, in another aspect, the invention also provides end articles containing the disclosed adhesive film or tape or composition. These articles include fabrics and garments. The garment types include intimates, including bras, underwear, and body shapers, outerwear and sportswear to seal seams, provide decorative trim, or allow for flat seams. In one embodiment, the end article is coated, impregnated or otherwise treated with the composition of this invention.

The TPU compositions of the present invention may also be made into fibers. Fabrics that utilize the fibers made from the TPU according to this invention can be made by knitting or weaving or by non-woven processes such as melt blown or spun bond. In some embodiments, the fabric of this invention is made using one or more different (conventional) fibers in combination with the fibers of the invention. Hard fibers, such as nylon and/or polyester may be used in combination with the fibers of this invention, but other fibers can also be utilized to make the fabric of this invention, provided that the fibers are resistant to high temperatures and/or are breathable.

In some embodiments, the end articles are fabrics and are used in the manufacture of garments including sports apparel, shirts, tights, bodysuits, gloves (made from the fabric), workwear, intimates, medical garments, nappies, bedding articles, sport equipment or any combination thereof.

Undergarments, such as bras and T-shirts as well as sport garments used for activities such as running, skiing, cycling, or other sports, can benefit from the properties of fibers or fabrics made using the TPU of the present invention. It will be understood by those skilled in the art that any garment can be made from the fabric of this invention.

Bedding articles such as pyjamas or sleeping bags. Sport equipment such as boxing gloves, helmets, handles or grips of rackets or bicycles, sleeping bags, tents, cushion covers on seats on boats, cars or bicycles, or covers on steering wheels of a boat and the like.

In other embodiments, the end articles are fibers and are described herein for their use to make one or more of any number of garments and articles including but not limited to: sports apparel, such as shorts, including biking, hiking, running, compression, training, golf, baseball, basketball, cheerleading, dance, soccer and/or hockey shorts; shirts, including any of the specific types listed for shorts above; tights including training tights and compression tights; swimwear including competitive and resort swimwear; bodysuits including wrestling, running and swimming body suits; and footwear. Additional embodiments include workwear such as shirts and uniforms. Additional embodiments include intimates including bras, panties, men's underwear, camisoles, body shapers, nightgowns, panty hose, men's undershirts, tights, socks and corsetry. Additional embodiments include medical garments and articles including: hosiery such as compression hosiery, diabetic socks, static socks, and dynamic socks; therapeutic burn treatment bandages and films; wound care dressings; medical garments. Additional applications include military applications that mirror one or more of the specific articles described above. Additional embodiments include bedding articles including sheets, blankets, comforters, mattress pads, mattress tops, and pillow cases.

In other embodiments, the end articles of this invention are fabrics and may be applied in fire retardant and thermal insulating materials and include for example clothing, boot and shoe liners, fire protection blankets or garments. These fabrics can be used to produce garments well suited for being worn by those in the military or garments worn by firefighters and other security personnel, and garments worn in industrial settings. These garments may include shirts, pants, bib overalls, socks and other leg wear, gloves, scarves, hats, helmets, face shields, vests, chaps, jackets, coats, aprons, waders, boots, shoes, and the like.

In other embodiment the end articles containing the disclosed adhesive film or tape or composition of the invention are car cushion covers, car steering wheels or car seats, which show fire retardant properties as well as breathability.

In other embodiment, the end articles containing the disclosed adhesive film or tape or composition of the

invention are coated wires and cables, gaskets, hoses and automobile parts for high temperature uses. In one embodiment, the end articles are particularly useful as sealing systems due to their high temperature resistance, and it may be used as sealing systems at the automotive industry. In one embodiment, the high temperature resistant hose is a fire hose, industrial hose, oil hose.

In still other embodiments, the articles containing the various composition described above include any article that will be exposed to high temperatures during its use, and especially such articles which have not been made using thermoplastic polyurethanes in the past because of such materials having insufficient high temperature resistance or performance.

In some embodiments, the present technology provides TPU compositions that have improved processing windows. The stickiness and/or tackiness is one aspect of processing, but there are others as well, and many TPU compositions have very narrow processing windows meaning a very tight set of conditions under which they process well. Sometimes, just slightly increasing the throughput of an extruder can change the processing conditions enough that a given TPU shifts out of its processing window and the product process suffers. As noted above, there is a need to improve the overall processability of TPU compositions, to broaden the TPU compositions processing window, making it less sensitive to processing changes, and so improving the quality of the final material (more uniform TPU, less deviances across lots of materials that can be caused by slight changes in processing conditions, etc.) Stickiness and surface tackiness,particularly for low durameter (i.e. less than 65 Shore A) TPUs, make it much harder to process TPU compositions and at some point the processing issues become so great that the TPU compositions cannot be processed effectively. This point where the TPU composition is not processable may generally include the point where the product coming from the process is not uniform in quality or production rate, where the production equipment becomes repeatedly blocked and/or impaired by material build-up, and/or where the product sticks to the equipment to the extent that it cannot be handled, collected, further processed and packaged, and/or sampled, etc. These processing problems have been a significant barrier to producing softer TPUs.

By reducing the stickiness of the TPU composition, the processing window for these materials can be greatly improved, that is the processing conditions under which these TPU compositions can be successfully processed without being overwhelmed by the problems and challenges described above. Providing a TPU composition, in some embodiments, without using a plasticizer, that can be processed in a "normal" way is a significant step forward and will allow the commercialization of TPU compositions, including soft or ultra-soft (Shore hardness of less than 65A) TPU compositions, which previously could not be manufactured and/or processed successfully or at least consistently well. Another way to describe an improvement provided by the invention is to say that the TPU compositions of the invention have improved extrudability and/or that they experience less or even no sticking with very low or no surface tackiness. In some embodiments, the TPU compositions of the invention can be processed in commercial scale continuous extruders, whereas corresponding non-inventive TPU compositions cannot be.

In some embodiments, the present invention provides TPU compositions that are ultra-soft. By ultra-soft it is meant that the TPU and/or the TPU composition have a Shore A hardness below 65A with no plasticizer. There are currently practical limits on how soft a commercial TPU can be, as conventional methods of making softer TPU compositions also result in materials that are very tacky and difficult to process. In addition, soft TPU tends to start losing its strength and so has poor physical properties. These limits have severely inhibited the commercial production and use of ultra-soft TPU compositions. In some embodiments, the present invention provides improved TPU compositions and methods of making TPU compositions that provide ultra-soft properties while avoiding these limitations.

In some embodiments, the TPU composition of the present invention has a Shore hardness below 65A. In some of these embodiments, the hardness level is achieved without the use of a plasticizer (the TPU composition may be free of any plasticizer).

The present technology provides the improved processing and softness by including a linear monohydric alcohol containing from 20 to 65 carbon atoms in the preparation of a crosslinkable TPU. In particular, in one embodiment, the combination of the linear monohydric alcohol containing from 20 to 65 carbon atoms with crosslinkability provides a TPU that is soft, can be processed easily, is insoluble, and has high heat resistance.

The present technology also includes a method of improving the processability of a crosslinkable thermoplastic polyurethane (TPU), where in some embodiments the performance and/or properties are measured by assessing the moisture vapor transmission rate (MVTR). Any of the TPU materials described above may be used in these methods. These methods include the step of using a linear monohydric alcohol containing from 20 to 65 carbon atoms in the preparation of a crosslinkable TPU. In some embodiments, the TPU is also prepared from a hydroxyl terminated compound containing carbon-carbon double bonds, and a polyisocyanate. Any of the TPU materials described above may be used in these methods.

The present technology also includes the use of a combination of a linear monohydric alcohol containing from 20 to 65 carbon atoms and crosslinkability to provide a composition that is soft, processable and has improved temperature resistance and/or properties, where in some embodiments the resistance and/or properties are measured by assessing the thermal properties of the TPU, and more specifically the melting point of the TPU as measured either by the Kofler

test or thermomechanical analysis (TMA). These uses include using a linear monohydric alcohol containing from 20 to 65 carbon atoms in the preparation of a crosslinkable TPU. In some embodiments the TPU is also prepared from a hydroxyl terminated compound containing carbon-carbon double bonds, and a polyisocyanate. Any of the TPU materials described above may be used in these uses.

The present technology also includes the use of a linear monohydric alcohol containing from 20 to 65 carbon atoms to improve the breathability of a crosslinkable thermoplastic polyurethane (TPU), where in some embodiments, the breathability is measured by assessing the moisture vapor transmission rate (MVTR). These uses include using a linear monohydric alcohol containing from 20 to 65 carbon atoms in the preparation of a crosslinkable TPU. In some embodiments, the TPU is also prepared from a hydroxyl terminated compound containing carbon-carbon double bonds, and a polyisocyanate. Any of the TPU materials described above may be used in these uses.

Various preferred features and embodiments will be described below by way of non-limiting illustration.

The amount in parts by weight of each chemical component described is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

## EXAMPLES

### Example 1

To a three-neck glass reactor equipped with an over-head mechanical stirrer, thermometer, column condenser, and receiver is added 52.76 parts of adipic acid (AA), 28.70 parts of 1,4-butanediol (BDO) and 18.54 parts of trimethylolpropane mono allyl ether (TMPME). The reaction medium is heated to 150°C to 190°C at ambient pressure (5-6 hours) and the generated water is collected. Then 0.003 parts of transesterification catalyst tetra-(2-ethylhexyl) titanate is added and a vacuum (0-15mmHg) is applied while the reaction medium is heated to 190°C to 200°C. The generated water is removed until the acid number becomes less than 0.5 (3-5 hours). The final polyol has a hydroxyl number of 68.1mgKOH/g (~Mn of 1647 g/mole).

### Example 2

To a three-neck glass reactor equipped with an over-head mechanical stirrer, thermometer, column condenser, and receiver is added 53.44 parts of adipic acid (AA), 41.63 parts of diethyleneglycol (DEG) and 4.93 parts of trimethylolpropane mono allyl ether (TMPME). The reaction medium is heated to 150°C to 190°C at ambient pressure (5-6 hours) and the generated water is collected. Then 0.003 parts of transesterification catalyst tetra-(2-ethylhexyl) titanate is added and a vacuum (0-15mmHg) is applied while the reaction medium is heated to 190°C to 200°C. The generated water is removed until the acid number becomes less than 0.5 (3-5 hours). The final polyol has a hydroxyl number of 68 (~Mn of 1650 g/mole).

### Examples 3-4

Examples 3 and 4 illustrate crosslinkable TPUs which contain 1,6-hexanediol as saturated linear chain extender. In these examples, a typical high temperature melt polymerization is used to make the TPUs synthesized from the components set forth in Table 1 below. The polyol glycol(s) is melted at 120°C and blended with the chain extender(s). The blend is mixed with molten 4,4'-diphenylmethane diisocyanate (MDI) and Unilin™ 700 or Unilin™ 350 and reacted at an initial temperature of 190°C. The TPU polymerization reaches completion in 3 to 4 minutes.

The TPU of Examples 3 and 4 is extruded into films with a variety of thicknesses ranging from 4 to 15 mil (102 - 380 μm). The TPU films are subsequently irradiated with UV radiation using mercury vapor lamp at 200 and 300 WPI (watts per inch) input power values at 2 different belt speeds (approximately 10 and 20 ft/min). The subject irradiated pieces, along with non-irradiated controls, are tested for cross-link character via solvent immersions.

Compression molded plaques are molded from the TPU and cut into smaller pieces weighing 1-2 grams and subjected to Soxhlet extraction in THF (tetrahydrofuran) and solvent dissolution in NMP (N-methylpyrrolidone) to determine whether the TPU is soluble in these solvents. In the THF Soxhlet extraction procedure, the TPU sample is immersed in the solvent and extraction was conducted at reflux for 6 hours. After the extraction the sample is first placed in water to remove the residual solvent and then placed in a convection oven at 105°C until constant weight is obtained indicating that all solvent has been removed. If the sample dissolved or has a crosslink density (CD) value less than 60% the THF solubility is rated as soluble, an indication of no or insufficient crosslinking being present. If the CD value was more than 60% the sample is rated as insoluble an indication of the presence of crosslinking. The CD values are calculated using

the following equation:

$$CD = 100 \times (1 - [(W_i - W_f) / W_i])$$

wherein $W_i$ and $W_f$ are the initial and final dry weight of the sample before and after Soxhlet extraction, respectively. Since the samples are not irradiated crosslinking is nil resulting in no solvent resistance.

For the determination of solubility in NMP, 1-2 gram samples of the TPU are immersed in NMP for 7 days. After 7 days, if the sample is completely dissolved, it is rated as soluble. If the sample does not dissolve, it is removed from solution and placed in water to remove excessive solvent and then placed in a convection oven at 140°C for 4 hours to remove any residual solvent. Samples that are observed to exhibit brittle properties are rated as insoluble. The results of the described solubility tests are set forth in Table 1.

Table 1

| Component (% wt) | Example No. | |
|---|---|---|
| | 3 | 4 |
| | | |
| MDI | 22.35 | 22.35 |
| 1000MW Polyester polyol | 57.61 | 55.98 |
| Unsaturated Polyol from Example 1 | 14.40 | 14.00 |
| Unilin™ 700 [1] | 1.00 | 3.00 |
| Saturated linear diol | 2.64 | 2.73 |
| Irgacure™ 651 [2] | 2.00 | 1.94 |
| Solubility in THF[3] after UV radiation | I | I |
| Solubility in NMP[4] after UV radiation | I | I |

[1] Unilin™ 700 Aliphatic saturated monohydric primary alcohol with average length of 62 carbon atoms and molecular wt. 886 g/mole
[2] Irgacure™ 651 Photoinitiator from Ciba
[3] THF Tetrahydrofuran solvent
[4] NMP N-methylpyrrolidone solvent
I: Insoluble

Examples 5-11

Examples 5 to 11 are prepared in the same way as examples 3 to 4, but with the components and amounts disclosed in Table 2. However, comparative samples 5 and 8 are not extruded, but compression moldedinto 5 mil films. Table 2 includes MVTR results for the breathable grades, i.e. the ones based on 1500MW polyethylene glycol polyol. The results are measured using 1 mil extruded film per ASTM E96B Upright cup method at room temperature and 50% relative humidity. Even though the inventive examples (Example 6 and 7) have lower levels of PEG polyol they exhibited higher MVTR values compared to comparative example (Example 5) which may be due to the presence of the additional ether linkages located in the unsaturated polyol.

Table 2

| Component (Parts) | Example No. | | | | | | |
|---|---|---|---|---|---|---|---|
| | 5 COMP | 6 INV | 7 INV | 8 COMP | 9 INV | 10 INV | 11 INV |
| | | | | | | | |
| MDI | 28.65 | 30.09 | 26.71 | 20.03 | 20.10 | 17.81 | 18.35 |
| 2000 MW polyester polyol | 0 | 0 | 0 | 0 | 32.81 | 0 | 0 |

(continued)

| Component (Parts) | Example No. | | | | | | |
|---|---|---|---|---|---|---|---|
| | 5 COMP | 6 INV | 7 INV | 8 COMP | 9 INV | 10 INV | 11 INV |
| 1000 MW polyester polyol | 0 | 0 | 0 | 79.97 | 25.78 | 61.18 | 61.08 |
| 1500 MW polyether polyol | 65.05 | 52.92 | 57.33 | 0 | 0 | 0 | 0 |
| Unilin™ 700 [1] | 0 | 2 | 2 | 0 | 1 | 1.32 | 0 |
| Unilin™ 350 [2] | 0 | 0 | 0 | 0 | 0 | 0 | 1.03 |
| Saturated linear diol | 6.30 | 7.11 | 5.59 | 0 | 2.58 | 0 | 0 |
| Unsaturated Polyol from Example 1 | 0 | 5.88 | 6.37 | 0 | 14.95 | 15.32 | 15.30 |
| Branched saturated triol | 0 | 0 | 0 | 0 | 0 | 0 | 0.1 |
| Irgacure™ 651 [3] | 0 | 2.00 | 2.00 | 0 | 2.00 | 2.04 | 2.00 |
| Extrusion | 1 mil | 1 mil | 1 mil | - | 5 mil | 5 mil | 5 mil |
| Compression | | - | - | 5 mil | - | - | - |
| MVTR (Upright Cup, ASTM E96B, $g/m^2/day$) | 650 | 1200 | 950 | N/A | N/A | N/A | N/A |
| Solubility in THF[4] after UV radiation | S | I | I | S | I | I | I |
| Solubility in NMP[5] after UV radiation | S | I | I | S | I | I | I |

[1] Unilin™ 700 Aliphatic saturated monohydric primary alcohol with average length of 62 carbon atoms and molecular wt. 886 g/mole
[2] Unilin™ 350 Aliphatic saturated monohydric primary alcohol with average length of 30 carbon atoms and molecular wt. 450 g/mole
[3] Irgacure™ 651 Photoinitiator from Ciba
[4] THF Tetrahydrofuran solvent
[5] NMP N-methylpyrrolidone solvent
I: Insoluble; S: Soluble

The thermal properties of the TPU at Examples 3-11 were determined by measuring their melting points. The melting points of the subject irradiated pieces, along with non-irradiated controls, were measured either by Kofler test or thermomechanical analysis (TMA). The results are set forth in Tables 3 and 5.

Table 3 - Kofler Melt Point

| (°C) | Example 9 | Example 10 | Example 11 | Example 3 | Example 4 |
|---|---|---|---|---|---|
| Non-irradiated Control | 95 | 66 | 71 | 99 | 96 |
| Irradiated at belt speed of 10 ft/min | 208 | 200 | 190 | 234 | 246 |
| Irradiated at belt speed of 20 ft/min | 196 | 200 | 180 | 203 | 184 |

Table 4 - TMA Melt Point

| (°C) | Example 5 (COMP) | Example 6 | Example 7 | Example 8 (COMP) | Example 9 |
|---|---|---|---|---|---|
| Non-irradiated Control | 116 | 126 | 104 | 57 | 87 |
| Irradiated at belt speed of 10 ft/min | 116 | 164 | 163 | 55 | 183 |
| Irradiated at belt speed of 20 ft/min | 115 | 128 | 124 | 54 | 190 |

The herein above melt points show that TPUs according to the present invention exhibit higher TMA melt points after exposure to UV radiation sufficient to produce adequate crosslinking.

All molecular weight values provided herein are weight average molecular weights unless otherwise noted. All molecular weight values have been determined by GPC analysis unless otherwise noted.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of' and "consisting of," where "consisting of' excludes any element or step not specified and "consisting essentially of' permits the inclusion of additional un-recited elements or steps that do not materially affect the essential or basic and novel characteristics of the composition or method under consideration.

## Claims

1. A crosslinkable thermoplastic polyurethane (TPU) comprising the reaction product of (1) a hydroxyl terminated compound containing carbon-carbon double bonds, (2) a polyisocyanate, and (3) a linear monohydric alcohol containing from 20 to 65 carbon atoms, wherein the (1) hydroxyl terminated compound containing carbon-carbon double bonds is of structural formula:

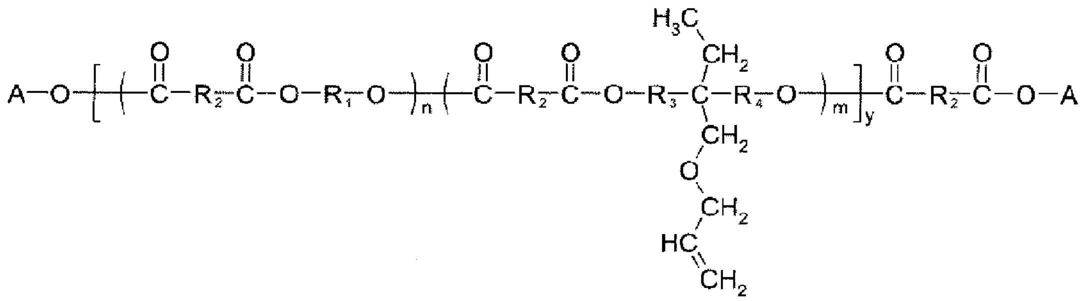

wherein each A independently represents $-R_1OH$ or a moiety selected from the structure represented as follows:

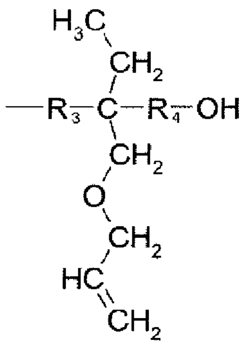

,

where $R_1$, $R_2$, $R_3$ and $R_4$ are each independently divalent linear or branched alkylene moieties that contain from 1 to about 10 carbon atoms, or a divalent ether group represented by $-R_5-O-R_5-$, wherein each $R_5$ is independently selected from a divalent alkylene moiety containing 1 to 5 carbon atoms, and where n and m are integers where n ranges from 0 to 50 and m ranges from 1 to 44, and y is an integer ranging from about 1 to about 20.

2. The thermoplastic polyurethane of claim 1, wherein it further comprises the reaction product of (4) an additional hydroxyl terminated compound.

3. The thermoplastic polyurethane of claim 2, wherein the (4) additional hydroxyl terminated compound is selected from a hydroxyl terminated polyether compound, a hydroxyl terminated polyester compound, a hydroxyl terminated polycarbonate compound, a polyol compound comprising a telechelic polyamide and mixtures thereof.

4. The thermoplastic polyurethane of claim 3, wherein the (4) additional hydroxyl terminated compound is selected

from poly(butylene adipate)glycol, poly(butylene hexylene adipate) glycol, poly(ethylene hexylene adipate) glycol, poly(propylene hexylene adipate) glycol, poly(ethylene butylene adipate) glycol, poly(butylene hexylene succinate) glycol, poly(butylene hexylene glutarate) glycol, poly(butylene hexylene pimelate) glycol, poly(butylene hexylene azelate) glycol, poly(butylene hexylene terephthalate) glycol, poly(butylene hexylene isophthalate) glycolpoly(ethylene) glycol, poly(propylene) glycol, and poly(tetramethylene ether) glycol, poly(propylene-ethylene) glycol.

**5.** The thermoplastic polyurethane of claim 1, wherein $R^1$ contains 4 carbon atoms, wherein $R^2$ contains 4 carbon atoms, wherein $R^3$ contains 1 carbon atom, and wherein $R^4$ contains 1 carbon atom.

**6.** The thermoplastic polyurethane of claim 1, wherein it further comprises the reaction product of (5) a chain extender.

**7.** The thermoplastic polyurethane of claim 6, wherein the (5) chain extender is selected from glycol chain extenders, amino alcohol chain extenders or amino chain extenders.

**8.** The thermoplastic polyurethane of claim 7, wherein the glycol chain extender is of the structural formula:

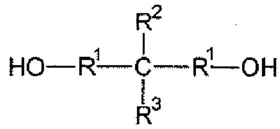

wherein $R^1$ groups can be the same or different and represent alkylene groups that contain from 1 to about 7 carbon atoms, wherein $R^2$ represents a hydrogen atom or an alkyl group containing from 1 to about 5 carbon atoms, and wherein $R^3$ represents a hydrogen atom or an alkyl group containing from 1 to about 5 carbon atoms or a monoallyl ether group, and wherein the glycol chain extender is present in the thermoplastic polyurethane at a level which is within the range of about 0.5 weight percent to about 20 weight percent of the total weight of the TPU.

**9.** The thermoplastic polyurethane of claim 7, wherein the glycol chain extender is butanediol, trimethylolpropane, trimethylolpropane monoallyl ether, glycerol, or a combination thereof.

**10.** The thermoplastic polyurethane of claim 1, wherein the (3) linear monohydric alcohol containing from 20 to 65 carbon atoms is non-substituted, saturated and primary alcohol.

**11.** The thermoplastic polyurethane of claim 1, wherein the (3) linear monohydric alcohol containing from 20 to 65 carbon atoms is saturated and it is a blend of linear monohydric alcohols whose average number of carbon atoms ranges from 20 to 63, from 23 to 63, from 20 to 60, from 30 to 62 carbon atoms, from 30 to 50, or from 32 to 48 carbon atoms.

**12.** The thermoplastic polyurethane of claim 1, wherein the (3) linear monohydric alcohol containing from 20 to 65 carbon atoms has a hydroxyl number of 60 to 130.

**13.** An adhesive film or tape or composition which comprises the TPU of claim 1.

**14.** A method of bonding two components together which comprises applying the adhesive film or tape or composition of claim 13 between the components to be bonded and activating the adhesive film or tape or composition via irradiation to raise the melting point of the TPU.

**15.** A method according to claim 14, wherein the irradiation utilizes UV radiation.

**16.** A method according to claim 14, wherein the two components are films.

**17.** Adhesive films obtained according to the method of claim 16.

**18.** A fabric or garment containing an adhesive film comprising a thermoplastic polyurethane composition comprising the reaction product of (1) a hydroxyl terminated compound containing carbon-carbon double bonds, (2) a polyisocyanate, and (3) a linear monohydric alcohol containing from 20 to 65 carbon atoms, which is formed by a method of bonding two components together which comprises applying the adhesive film between the components to be bonded and activating the adhesive film or tape composition via irradiation to raise the melting point of the TPU,

wherein the hydroxyl terminated compound containing carbon-carbon double bonds (1) is of structural formula:

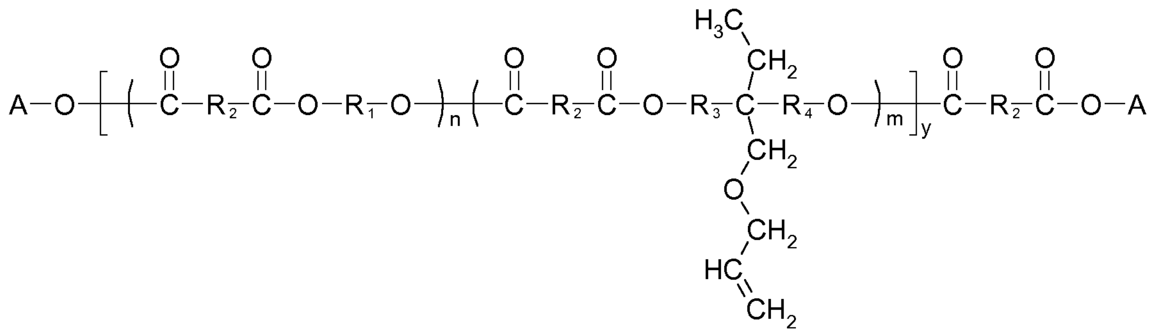

wherein each A independently represents $-R_1OH$ or a moiety selected from the structure represented as follows:

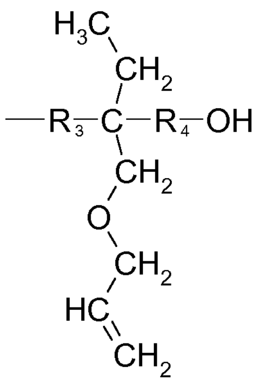

,

where $R_1$, $R_2$, $R_3$ and $R_4$ are each independently divalent linear or branched alkylene moieties that contain from 1 to about 10 carbon atoms, or a divalent ether group represented by $-R_5-O-R_5-$, wherein each $R_5$ is independently selected from a divalent alkylene moiety containing 1 to 5 carbon atoms, and where n and m are integers where n ranges from 0 to 50 and m ranges from 1 to 44, and y is an integer ranging from about 1 to about 20.

**Patentansprüche**

1. Vernetzbares thermoplastisches Polyurethan (TPU), das das Reaktionsprodukt von Folgendem umfasst: (1) einer Hydroxyl-terminierten Verbindung, die Kohlenstoff-Kohlenstoff-Doppelbindungen enthält, (2) einem Polyisocyanat und (3) einem linearen einwertigen Alkohol, der 20 bis 65 Kohlenstoffatome enthält, wobei die (1) Hydroxyl-terminierte Verbindung, die Kohlenstoff-Kohlenstoff-Doppelbindungen enthält, die folgende Strukturformel aufweist:

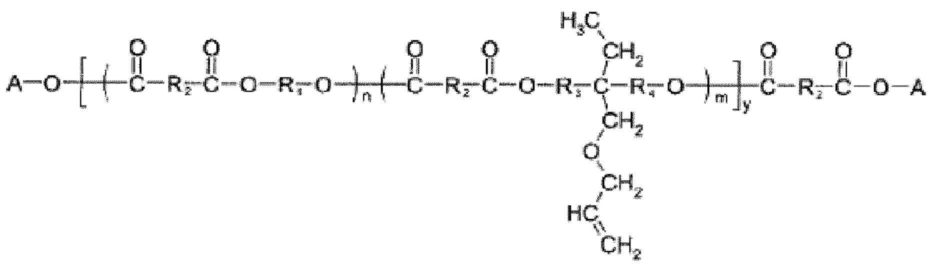

wobei A jeweils unabhängig voneinander $-R_1OH$ oder eine Einheit darstellt, die aus der wie folgt dargestellten Struktur ausgewählt ist:

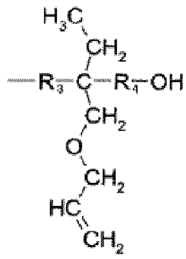

,

wobei $R_1$, $R_2$, $R_3$ und $R_4$ jeweils unabhängig zweiwertige lineare oder verzweigte Alkyleneinheiten, die 1 bis etwa 10 Kohlenstoffatome enthalten, oder eine zweiwertige Ethergruppe, dargestellt durch $-R_5-O-R_5-$, sind, wobei jedes $R_5$ unabhängig voneinander aus einer zweiwertigen Alkyleneinheit mit 1 bis 5 Kohlenstoffatomen ausgewählt ist, und wobei n und m ganze Zahlen sind, wobei n von 0 bis 50 und m von 1 bis 44 reicht und y eine ganze Zahl im Bereich von etwa 1 bis etwa 20 ist.

**2.** Thermoplastisches Polyurethan nach Anspruch 1, wobei es weiterhin das Reaktionsprodukt (4) einer zusätzlichen Hydroxyl-terminierten Verbindung umfasst.

**3.** Thermoplastisches Polyurethan nach Anspruch 2, wobei die (4) zusätzliche Hydroxyl-terminierte Verbindung aus Folgendem ausgewählt ist:
einer Hydroxyl-terminierten Polyetherverbindung, einer Hydroxyl-terminierten Polyesterverbindung, einer Hydroxyl-terminierten Polycarbonatverbindung, einer Polyolverbindung, die ein telechelisches Polyamid umfasst, und Mischungen davon.

**4.** Thermoplastisches Polyurethan nach Anspruch 3, wobei die (4) zusätzliche Hydroxyl-terminierte Verbindung aus Folgendem ausgewählt ist: Poly(butylenadipat)glykol, Poly(butylenhexylenadipat)glykol, Poly(ethylenhexylenadipat)glykol, Poly(propylenhexylenadipat)glykol, Poly(ethylenbutylenadipat)glykol, Poly(butylenhexylensuccinat)glykol, Poly(butylenhexylenglutarat)glykol, Poly(butylenhexylenpimelat)glykol, Poly(butylenhexylenazelat)glykol, Poly(butylenhexylenterephthalat)glykol, Poly(butylenhexylenisophthalat)glykol, Poly(ethylen)glykol, Poly(propylen)glykol und Poly(tetramethylenether)glykol, Poly(propylenethylen)glykol.

**5.** Thermoplastisches Polyurethan nach Anspruch 1, wobei $R^1$ 4 Kohlenstoffatome enthält, wobei $R^2$ 4 Kohlenstoffatome enthält, wobei $R^3$ 1 Kohlenstoffatom enthält und wobei $R^4$ 1 Kohlenstoffatom enthält.

**6.** Thermoplastisches Polyurethan nach Anspruch 1, wobei es weiterhin das Reaktionsprodukt von (5) einem Kettenverlängerer umfasst.

**7.** Thermoplastisches Polyurethan nach Anspruch 6, wobei der (5) Kettenverlängerer aus Glykolkettenverlängerern, Aminoalkoholkettenverlängerem oder Aminokettenverlängerern ausgewählt ist.

**8.** Thermoplastisches Polyurethan nach Anspruch 7, wobei der Glykolkettenverlängerer folgende Strukturformel aufweist:

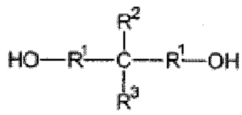

wobei $R^1$-Gruppen gleich oder verschieden sein können und Alkylengruppen darstellen, die 1 bis etwa 7 Kohlenstoffatome enthalten, wobei $R^2$ ein Wasserstoffatom oder eine Alkylgruppe mit 1 bis etwa 5 Kohlenstoffatomen darstellt, und wobei $R^3$ ein Wasserstoffatom oder eine Alkylgruppe mit 1 bis etwa 5 Kohlenstoffatomen oder eine Monoallylethergruppe darstellt, und wobei der Glykolkettenverlängerer in dem thermoplastischen Polyurethan in einer Menge vorhanden ist, die im Bereich von etwa 0,5 Gew .-% bis etwa 20 Gew .-% des Gesamtgewichts des TPU liegt.

**9.** Thermoplastisches Polyurethan nach Anspruch 7, wobei der Glykolkettenverlängerer Butandiol, Trimethylolpropan, Trimethylolpropanmonoallylether, Glycerol oder eine Kombination davon ist.

**10.** Thermoplastisches Polyurethan nach Anspruch 1, wobei der (3) lineare einwertige Alkohol, der 20 bis 65 Kohlenstoffatome enthält, ein nicht substituierter, gesättigter und primärer Alkohol ist.

**11.** Thermoplastisches Polyurethan nach Anspruch 1, wobei der (3) lineare einwertige Alkohol, der 20 bis 65 Kohlenstoffatome enthält, gesättigt ist und eine Mischung linearer einwertiger Alkohole ist, deren durchschnittliche Anzahl an Kohlenstoffatomen im Bereich von 20 bis 63, von 23 bis 63, von 20 bis 60, von 30 bis 62 Kohlenstoffatomen, von 30 bis 50 oder von 32 bis 48 Kohlenstoffatomen liegt.

**12.** Thermoplastisches Polyurethan nach Anspruch 1, wobei der (3) lineare einwertige Alkohol, der 20 bis 65 Kohlenstoffatomen enthält, eine Hydroxylzahl von 60 bis 130 aufweist.

**13.** Klebefilm oder -band oder -zusammensetzung, die das TPU nach Anspruch 1 umfasst.

**14.** Verfahren zum Verbinden zweier Komponenten miteinander, das das Aufbringen des Klebefilms oder des Klebebands oder der Klebezusammensetzung nach Anspruch 13 zwischen den zu verklebenden Komponenten und das Aktivieren des Klebefilms oder des Klebebands oder der Klebezusammensetzung durch Bestrahlung umfasst, um den Schmelzpunkt des TPU zu erhöhen.

**15.** Verfahren nach Anspruch 14, wobei die Bestrahlung UV-Strahlung nutzt.

**16.** Verfahren nach Anspruch 14, wobei die beiden Komponenten Filme sind.

**17.** Klebefilme, die gemäß dem Verfahren von Anspruch 16 erhalten werden.

**18.** Stoff oder Kleidungsstück, das einen Klebefilm enthält, der eine thermoplastische Polyurethanzusammensetzung umfasst, die das Reaktionsprodukt von (1) einer Hydroxyl-terminierten Verbindung, die Kohlenstoff-Kohlenstoff-Doppelbindungen enthält, (2) einem Polyisocyanat und (3) einem linearer einwertigen Alkohol, der 20 bis 65 Kohlenstoffatome enthält, der durch ein Verfahren zum Verbinden zweier Komponenten zusammen gebildet wird, umfasst, das das Aufbringen des Klebefilms zwischen den zu verklebenden Komponenten und das Aktivieren des Klebefilms oder der Klebebandzusammensetzung durch Bestrahlung umfasst, um den Schmelzpunkt des TPU zu erhöhen,
wobei die Hydroxyl-terminierte Verbindung, die Kohlenstoff-Kohlenstoff-Doppelbindungen (1) enthält, die folgende Strukturformel aufweist:

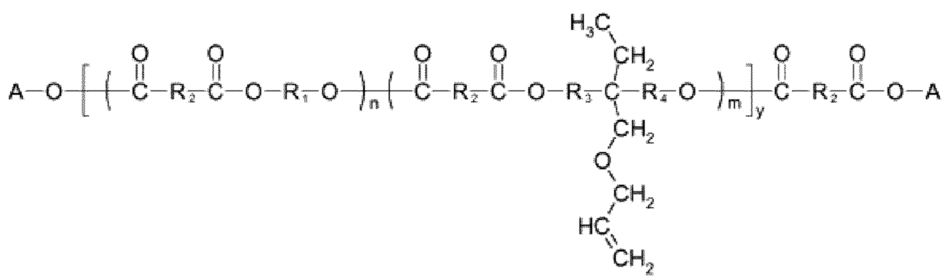

wobei A jeweils unabhängig voneinander $-R_1OH$ oder eine Einheit darstellt, die aus der wie folgt dargestellten Struktur ausgewählt ist:

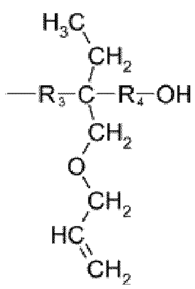

wobei $R_1$, $R_2$, $R_3$ und $R_4$ jeweils unabhängig zweiwertige lineare oder verzweigte Alkyleneinheiten, die 1 bis etwa

10 Kohlenstoffatome enthalten, oder eine zweiwertige Ethergruppe, dargestellt durch $-R_5-O-R_5-$, sind, wobei jedes $R_5$ unabhängig voneinander aus einem zweiwertigen Alkylenrest mit 1 bis 5 Kohlenstoffatomen ausgewählt ist und wobei n und m ganze Zahlen sind, wobei n im Bereich von 0 bis 50 und m im Bereich von 1 bis 44 liegt und y eine ganze Zahl im Bereich von etwa 1 bis etwa 20 ist.

**Revendications**

1. Polyuréthane thermoplastique réticulable (TPU) comprenant le produit de la réaction de (1) un composé à terminaison hydroxyle contenant des doubles liaisons carbone-carbone, (2) un polyisocyanate, et (3) un alcool monovalent linéaire contenant de 20 à 65 atomes de carbone, dans lequel le composé à terminaison hydroxyle contenant des doubles liaisons carbone-carbone (1) répond à la formule structurelle :

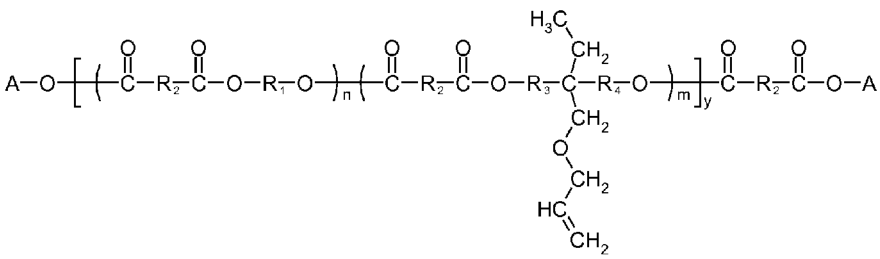

dans laquelle chaque A représente indépendamment $-R_1OH$ ou un fragment choisi parmi la structure représentée comme suit :

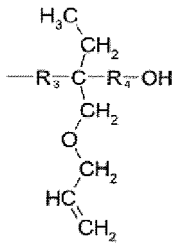

dans laquelle chacun de $R_1$, $R_2$, $R_3$ et $R_4$ est indépendamment un fragment alkylène divalent linéaire ou ramifié qui contient de 1 à environ 10 atomes de carbone, ou un groupe éther divalent représenté par $-R_5-O-R_5-$ où chaque $R_5$ est indépendamment choisi parmi un fragment alkylène divalent contenant 1 à 5 atomes de carbone, et dans laquelle n et m sont des entiers où n est situé dans la plage allant de 0 à 50 et m est situé dans la plage allant de 1 à 44, et y est un entier situé dans la plage allant d'environ 1 à environ 20.

2. Polyuréthane thermoplastique selon la revendication 1, qui comprend en outre le produit de la réaction de (4) un composé à terminaison hydroxyle additionnel.

3. Polyuréthane thermoplastique selon la revendication 2, dans lequel le composé à terminaison hydroxyle additionnel (4) est choisi parmi un composé polyéther à terminaison hydroxyle, un composé polyester à terminaison hydroxyle, un composé polycarbonate à terminaison hydroxyle, un composé polyol comprenant un polyamide téléchélique, et leurs mélanges.

4. Polyuréthane thermoplastique selon la revendication 3, dans lequel le composé à terminaison hydroxyle additionnel (4) est choisi parmi le poly(adipate de butylène)glycol, le poly(adipate de butylène-hexylène)glycol, le poly(adipate d'éthylène-hexylène)glycol, le poly(adipate de propylène-hexylène)glycol, le poly(adipate d'éthylène-butylène)glycol, le poly(succinate de butylène-hexylène)glycol, le poly(glutarate de butylène-hexylène)glycol, le poly(pimélate de butylène-hexylène)glycol, le poly(azélate de butylène-hexylène)glycol, le poly(téréphtalate de butylène-hexylène)glycol, le poly(isophtalate de butylène-hexylène)glycol, le glycolpoly(éthylène)glycol, le poly(propylène)glycol, et le poly(éther de tétraméthylène)glycol, le poly(propylène-éthylène)glycol.

5. Polyuréthane thermoplastique selon la revendication 1, dans lequel $R^1$ contient 4 atomes de carbone, dans lequel

$R^2$ contient 4 atomes de carbone, dans lequel $R^3$ contient 1 atome de carbone, et dans lequel $R^4$ contient 1 atome de carbone.

6. Polyuréthane thermoplastique selon la revendication 1, qui comprend en outre le produit de la réaction de (5) un agent d'allongement de chaîne.

7. Polyuréthane thermoplastique selon la revendication 6, dans lequel l'agent d'allongement de chaîne (5) est choisi parmi les agents d'allongement de chaîne de type glycol, les agents d'allongement de chaîne de type amino-alcool et les agents d'allongement de chaîne de type amino.

8. Polyuréthane thermoplastique selon la revendication 7, dans lequel l'agent d'allongement de chaîne de type glycol répond à la formule structurelle :

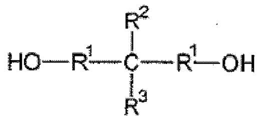

dans laquelle les groupes $R^1$ peuvent être identiques ou différents et représentent des groupes alkylène qui contiennent de 1 à environ 7 atomes de carbone, dans laquelle $R^2$ représente un atome d'hydrogène ou un groupe alkyle contenant de 1 à environ 5 atomes de carbone, et dans laquelle $R^3$ représente un atome d'hydrogène ou un groupe alkyle contenant de 1 à environ 5 atomes de carbone ou un groupe monoallyléther, et dans lequel l'agent d'allongement de chaîne de type glycol est présent dans le polyuréthane thermoplastique en une proportion qui est située dans la plage allant d'environ 0,5 % en poids à environ 20 % en poids du poids total du TPU.

9. Polyuréthane thermoplastique selon la revendication 7, dans lequel l'agent d'allongement de chaîne de type glycol est le butanediol, le triméthylolpropane, l'éther monoallylique de triméthylolpropane, le glycérol, ou une combinaison de ceux-ci.

10. Polyuréthane thermoplastique selon la revendication 1, dans lequel l'alcool monovalent linéaire contenant de 20 à 65 atomes de carbone (3) est un alcool non substitué, saturé et primaire.

11. Polyuréthane thermoplastique selon la revendication 1, dans lequel l'alcool monovalent linéaire contenant de 20 à 65 atomes de carbone (3) est saturé et est un mélange d'alcools monovalents linéaires dont le nombre moyen d'atomes de carbone est situé dans la plage allant de 20 à 63, de 23 à 63, de 20 à 60, de 30 à 62 atomes de carbone, de 30 à 50, ou de 32 à 48 atomes de carbone.

12. Polyuréthane thermoplastique selon la revendication 1, dans lequel l'alcool monovalent linéaire contenant de 20 à 65 atomes de carbone (3) a un indice d'hydroxyle de 60 à 130.

13. Composition ou bande ou film adhésif qui comprend le TPU de la revendication 1.

14. Procédé pour coller ensemble deux composants ensemble, qui comprend l'application de la composition ou de la bande ou du film adhésif de la revendication 13 entre les composants devant être collés, et l'activation de la composition ou de la bande ou du film adhésif via irradiation pour élever le point de fusion du TPU.

15. Procédé selon la revendication 14, dans lequel l'irradiation utilise un rayonnement UV.

16. Procédé selon la revendication 14, dans lequel les deux composants sont des films.

17. Films adhésifs obtenus conformément au procédé de la revendication 16.

18. Etoffe ou vêtement contenant un film adhésif comprenant une composition de polyuréthane thermoplastique comprenant le produit de la réaction de (1) un composé à terminaison hydroxyle contenant des doubles liaisons carbone-carbone, (2) un polyisocyanate, et (3) un alcool monovalent linéaire contenant de 20 à 65 atomes de carbone, qui est formée par un procédé de collage ensemble de deux composants qui comprend l'application du film adhésif entre les deux composants devant être collés et l'activation de la composition ou de la bande ou du film adhésif via irradiation pour élever le point de fusion du TPU,

dans lequel le composé à terminaison hydroxyle contenant des doubles liaisons carbone-carbone (1) répond à la formule structurelle :

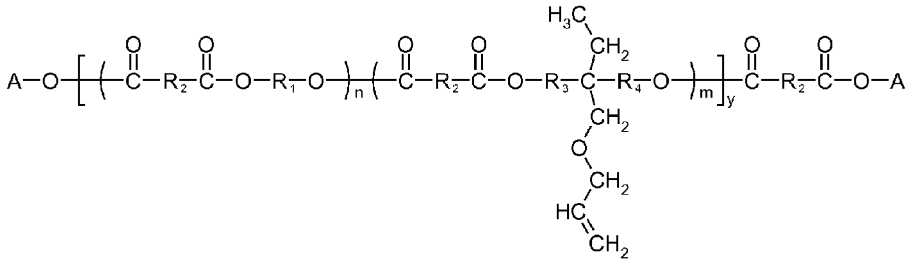

dans laquelle chaque A représente indépendamment $-R_1OH$ ou un fragment choisi parmi la structure représentée comme suit :

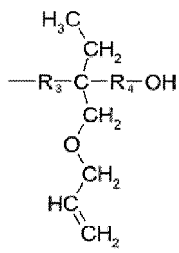

dans laquelle chacun de $R_1$, $R_2$, $R_3$ et $R_4$ est indépendamment un fragment alkylène divalent linéaire ou ramifié qui contient de 1 à environ 10 atomes de carbone, ou un groupe éther divalent représenté par $-R_5-O-R_5-$ où chaque $R_5$ est indépendamment choisi parmi un fragment alkylène divalent contenant 1 à 5 atomes de carbone, et dans laquelle n et m sont des entiers où n est situé dans la plage allant de 0 à 50 et m est situé dans la plage allant de 1 à 44, et y est un entier situé dans la plage allant d'environ 1 à environ 20.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4131731 A